(19) Europäisches Patentamt
European Patent Office
Office européen des brevets

(11) **EP 1 471 159 B1**

(12) **EUROPEAN PATENT SPECIFICATION**

(45) Date of publication and mention
of the grant of the patent:
**14.01.2009 Bulletin 2009/03**

(21) Application number: **03703052.5**

(22) Date of filing: **24.01.2003**

(51) Int Cl.:
*C22C 38/00* (2006.01)       *C22C 38/38* (2006.01)
*C22C 38/60* (2006.01)       *C22C 33/02* (2006.01)
*C22C 38/02* (2006.01)       *C22C 38/04* (2006.01)
*C22C 38/24* (2006.01)

(86) International application number:
**PCT/JP2003/000694**

(87) International publication number:
**WO 2003/064715 (07.08.2003 Gazette 2003/32)**

(54) **BAINITE TYPE NON-REFINED STEEL FOR NITRIDING AND NITRIDED PRODUCT**

NICHTRAFFINIERTER STAHL VOM BAINIT-TYP FÜR DIE NITRIDIERUNG UND NITRIDIERTES PRODUKT

ACIER NON RAFFINE DE TYPE BAINITE POUR NITRURATION ET PRODUIT NITRURE

(84) Designated Contracting States:
**DE GB**

(30) Priority: **29.01.2002   JP 2002019412**
**29.01.2002   JP 2002019750**

(43) Date of publication of application:
**27.10.2004   Bulletin 2004/44**

(73) Proprietors:
• **Tanaka Seimitsu Kogyo Co., Ltd.**
**Toyama-shi,**
**Toyama 930-0996 (JP)**
• **HONDA GIKEN KOGYO KABUSHIKI KAISHA**
**Minato-ku**
**Tokyo 107-8556 (JP)**

(72) Inventors:
• **HARASAKI, Takaaki,**
**Tanaka Seimitsu Kogyo Co., Ltd.**
**Toyama-shi, Toyama 930-0996 (JP)**
• **NOGAMI, Takuya,**
**Tanaka Seimitsu Kogyo Co., Ltd.**
**Toyama-shi, Toyama 930-0996 (JP)**
• **YAMADA, Noriyuki,**
**K. K. Honda**
**Wako-shi, Saitama 351-0193 (JP)**
• **SHIIKI, Katsuaki,**
**K. K. Honda**
**Wako-shi, Saitama 351-0193 (JP)**
• **TAKAHASHI, Shinya,**
**K. K. Honda**
**Wako-shi, Saitama 351-0193 (JP)**
• **KANO, Takashi,**
**Daido Steel Co., Ltd.**
**Nagoya-shi, Aichi 457-0054 (JP)**
• **KUREBAYASHI, Yutaka,**
**Daido Steel Co., Ltd.**
**Nagoya-shi, Aichi 457-0054 (JP)**

(74) Representative: **Böhm, Brigitte et al**
**Weickmann & Weickmann**
**Patentanwälte**
**Postfach 860 820**
**81635 München (DE)**

(56) References cited:
EP-A- 1 264 912              EP-A- 1 316 624
JP-A- 1 168 848              JP-A- 10 287 953
JP-A- 2000 034 538          JP-A- 2000 219 936
JP-A- 2000 282 169          JP-A- 2002 363 690
JP-A- 2003 003 234

• PATENT ABSTRACTS OF JAPAN vol. 1999, no. 01, 29 January 1999 (1999-01-29) -& JP 10 287953 A (DAIDO STEEL CO LTD), 27 October 1998 (1998-10-27)
• PATENT ABSTRACTS OF JAPAN vol. 013, no. 442 (C-641), 3 October 1989 (1989-10-03) -& JP 01 168848 A (SANYO SPECIAL STEEL CO LTD), 4 July 1989 (1989-07-04)
• PATENT ABSTRACTS OF JAPAN vol. 2000, no. 11, 3 January 2001 (2001-01-03) -& JP 2000 219936 A (DAIDO STEEL CO LTD), 8 August 2000 (2000-08-08)

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **PATENT ABSTRACTS OF JAPAN vol. 2003, no. 05, 12 May 2003 (2003-05-12) -& JP 2003 003234 A (DAIDO STEEL CO LTD), 8 January 2003 (2003-01-08)**

## Description

Technical Field

The present invention relates to a bainite-type untempered steel to be nitrided.

. The present invention also relates to a nitrided product, for example, a rocker arm product manufactured from the steel.

Background Art

Steels called nitrided steel, including soft nitrided steel, have conventionally an alloy composition containing a comparatively large amount of aluminum. After the steel is shaped into the configuration of a mechanical component part and hardened and tempered, nitriding treatment is carried out to obtain a product. The conventional nitrided steel has many problems as described below.

1) Tempering is generally considered indispensable for securing a mechanical strength of a component part, but is a factor of making a manufacturing cost high. Therefore it is preferable that the steel is not tempered.
2) To secure the hardness of a surface layer of not less than 750 HV, it is necessary to add not only a large amount of Cr but also a large amount of Al (not less than 1% each) to the steel. Consequently, the material becomes hard and workability such as drilling efficiency is impaired.
3) To improve the drilling efficiency or the like, addition of Pb is conventionally conducted, however, the presence of Pb is not preferable in stabilizing a gas nitriding property.
4) The steel containing a large amount of Al has problems, for example, in manufacturability peculiar thereto especially castability, and in the quality of a steel ingot especially surface imperfection.

A large number of proposals have been made as a result of researches conducted for many years to improve the machinability of various kinds of steel. The following free-machining steels have been known: (1) free-machining steel to which elements for improving its machinability such as S, Pb, Bi, Se, and Te are added, (2) free-machining steel to which Ca is added, and (3) free-machining steel to which Ca and S, etc. are compositely added. As for the free-machining steel to which Ca and S, etc. are compositely added, Japanese Patent Application Laid-Open No. 49-5815 is publicly known. In the free-machining steel disclosed therein, the composition of non-metal inclusion shown by the ternary system state diagram of $CaO-Al_2O_3-SiO_2$ is present in the mullite region and 5 to 15 ppm of Ca and 0.04 to 0.1% of S are contained therein. However, the machinability of the said conventional free-machining steel to which Ca and S, etc. are added varies widely, thus it cannot be said that the machinability is sufficiently high.

As a recent example of the known invention regarding steel for machine structural use, Japanese Patent Application No. 10-287953 "Steel for machine structural use superior in mechanical property and drilling efficiency" is a typical known invention. The free-machining steel is characterized in including calcium-manganese sulfide inclusion containing 1% or less of calcium in a spindle-shape with amajor axis/minor axis ratio of 5, which encloses a calcium aluminate oxide inclusion containing 8 to 62 % of CaO. This invention has realized excellent machinability, however, variations in the machinability were sometimes observed during the operation. It can be understood that this is because the calcium-manganese sulfide inclusion has a variety of presence forms.

Also, disclosed in Japanese Patent Application Laid-Open No. 2000-34538 is a Ca free-machining steel where machinability of the above free-machining steel to which Ca and S, etc. are compositely added is improved. The Ca free-machining steel described in the publication is a free-machining steel with excellent lathe-turning performance which contains the following elements: C: 0.1 to 0.8%, Si: 0. 01 to 2. 5%, Mn: 0.1 to 3.5%, P: 0. 001 to 0.02%, S: 0.005 to 0.4%, Al: 0.001 to 0.1%, Ca: 0.0005 to 0.02%, O: 0.0005 to 0.01% and N: 0.001 to 0.04%, and the residue composed of Fe and unavoidable impurities, and also satisfies the formulas $X/(X+Y+Z) \leqq 0.3$ and $Y/(X+Y+Z) \geqq 0.1$, supposing that the ratio of the area of a sulfide containing not less than 40% of Ca to the entire examination and observation visual field is X, the ratio of the area of a sulfide containing 3 to 40% of Ca to the entire examination and observation visual field is Y, and the ratio of the area of a sulfide containing less than 0.3% of Ca to the entire examination and observation visual field is Z. Although the machinability of the Ca free-machining steel has less difference than the conventional one containing an oxide inclusion, the machinability thereof is insufficient.

In the description "free-machining steel" disclosed in Japanese Patent Application Laid-Open No. 2000-219936, the number of inclusions that should be present is clarified, thus the free-machining steel has less difference in its machinability. The steel of the invention is characterized in that it includes not less than five sulfides containing 0.1 to 1% of Ca per 3.3mm$^2$. Each sulfide has a diameter of not less than 5$\mu$m, supposing that the sulfide is circular.

It has been found that steel having an alloy composition for machine structural use shows stable machinability when the occupation area of sulfide inclusion containing not less than 1.0 wt% of Ca which is present in contact with oxide inclusion containing 8 to 62 wt% of CaO is not less than $2.0 \times 10^{-4}$mm per visual field area of 3.5mm$^2$. The method of manufacturing the steel has been established and proposed (Japanese Patent Application Laid-Open No. 2001-174606).

It has been proved by later studies that the inclusion having the form in which the oxide inclusion forming the core is surrounded with the inclusion containing the sulfide as its main component, which the present applicant calls sulfide form control type free-machining component", is applicable to a wide range of steels. However, the said inclusion is not applicable to steel containing a large amount of Al. To control the form of the inclusion favorably, the content of Al should be 0.02% or less. However, as described above, nitrided steel in common use contains at least 1% of Al, thus it is impossible to generate the free-machining component of sulfide form control type and utilize it.

Generally, a steel rocker arm mounted in an internal combustion engine as a component part for machine structural use is formed into a desired final configuration by means of rough processing by plastic work such as forging and following cutting process. A lathe-turning process is a manufacturing process which is applied to almost all component parts. Since the ratio of the cost of lathe-turning process to the manufacturing cost of a component part for machine structural use is considerably high, there have been increasing demands for development of a free-machining steel superior in machinability to reduce the cost.

Disclosure of the Invention

It is an object of the present invention to provide free-machining steel to-be-nitrided which allows the free-machining component of sulfide form control type providing preferable machinability to be utilized in nitriding steel, having machinability equivalent of or higher than Pb free-machining steel, and nitrided in an untempered state to manufacture mechanical component parts, while its mechanical property and nitriding property maintained. It is still another object of the present invention to provide mechanical component parts such as rocker arm products using the said nitriding steel.

It is general to perform heat treatment such as nitriding treatment on a rocker arm to impart a strength thereto so that it withstands a dynamic load generated therein. Since the nitriding treatment is not sufficiently considered in the conventional free-machining steel mentioned above, it is difficult to secure surface hardness and nitrided layer depth after nitriding treatment and also softening-resistant property in performing nitriding treatment. Thus it is impossible to obtain a favorable nitriding property. The softening-resistant property means prevention of an inner hardness from being reduced by a treating temperature in nitriding operation.

In addition, with regard to the nitriding treatment, generally a desired strength is imparted to steel by tempering it before nitriding. However, a tempering process is a factor of making the manufacturing cost high. Thus, to meet the recent demand for lowering the manufacturing cost, there has been a growing demand for development of a method of allowing steel untempered after it is hot-forged and plastically processed to have a strength as high as the conventional tempered steel. But the no tempering is not sufficiently considered for the conventional free-machining steel. Therefore, the conventional arts have been incapable of imparting properties of good productivity and favorable strength to untempered free-machining steel.

Although the above-described known Pb free-machining steel is superior in machinability, Pb free-machining steel is poisonous. Thus to cope with environmental problems in recent years, the use thereof should be restrained to the utmost.

The present invention has been made in view of the above-described situation, and an object of the present invention is, by solving the above-described problems, to provide an untempered free-machining steel to be nitrided having machinability equivalent to that of the known Pb free-machining steel even though Pb is not contained, having superior nitriding properties such as nitrided layer depth, and also having a strength equal to that of the known tempered steel without being tempered. It is also an object of the present invention to provide mechanical component parts using the nitrided steel, for example, steel for a rocker arm and a rocker arm product manufactured from the said steel for a rocker arm.

To solve the above-described problems, the present inventors have made energetic investigation. As a result, they have succeeded in solving the above problems and developing a bainite-type untempered steel to be nitrided having machinability equivalent to that of the known Pb free-machining steel, superior in its nitriding properties such as nitrided layer depth, and having a strength equal to that of the known tempered steel without being tempered. They have also succeeded in developing mechanical component parts using the nitrided steel such as a rocker arm product.

The free-machining steel to be nitrided of the present invention (bainite-type untempered steel) achieving the above-described object contains the following elements including C: 0.05 to 0.8 wt%, Si: 0. 01 to 2. 5 wt%, Mn: 0.1 to 3.5 wt%, P: 0. 001 to 0.2 wt%, S: 0.01 to 0.2 wt%, Cr: 1.0 to 3.5 wt%, V: 0.1 to 0.5 wt%, Al: 0.001 to 0.020 wt%, Ca: 0.0005 to 0.02 wt%, and O: 0.0005 to 0.01 wt% as its basic alloy composition optionally one or more of Mo ≤ 2 wt%, Cu ≤ 2 wt%, Ni ≤ wt%, B 0.0005 -0.01%, Nb ≤ 0.2 wt%, Ti ≤ 0.2 wt%, Ta ≤ 0.2 wt%, Zr ≤ 0.5 with, Mg ≤ 0.02 wt%, Pb ≤ 0.4 wt%. Bi ≤ 0,4 wt%, Se ≤ 0.4 wt% and Te ≤ 0.2 wt% and the residue composed of unavoidable impurities and Fe, wherein an occupation area of a sulfide inclusion present in contact with an oxide inclusion containing 8 to 62 wt% of CaO and containing not less than 1.0 wt% of Ca is not less than $2.0 \times 10^{-4} mm^2$ per visual field area of $3.5mm^2$, provided that each content of the Mn, the S, and the Cr satisfies the formula:

$$([Mn]-55\times[S]/32+[Cr])>2.0$$

(where [ ] indicates wt% (wt/wt) of each element) when Mo is not comprised, or each content of said Mn, said S, said Cr and said Mo satisfies the following formula:

$$([Mn]-55\times[S]/32+[Cr]+[Mo]) > 2.0$$

(where [ ] indicates wt% (wt/wt) of each element) when Mo is comprised.

In the method of manufacturing the bainite-type untempered free-machining steel to be nitrided, an alloy having the above-described alloy composition is melted, wherein an operation satisfying the following conditions 1) through 3) is performed:

1) $[_HS]/[_HO]$: 8 to 80
where $[_HS]=[S]\times10^{logFs}$, and $[_HO]=[O]\times10^{logFo}$

$$logFs=0.113[C]+0.065[Si]-0.025[Mn]+0.043[P]-0.028[S]-$$
$$0.013[Cu]-0.011[Cr]+0.0027[Mo]-0.27[O]+0.024[N]+$$
$$0.054[Al]$$

$$logFo=-0.44[C]-0.131[Si]-0.02[Mn]-0.147[P]+0.133[S]-$$
$$0.0095[Cu]+0.006[Ni]-0.041[Cr]+0.0035[Mo]-1.00[O]-$$
$$0.1834[N]-0.20[Al]+0.11[V]$$

2) [sol-Al]: 0.02 to 0.20% and
3) $[Ca]\times[S]$: $1 \times 10^{-5}$ to $1 \times 10^{-3}$

Further, the steel for the rocker arm according to the present invention is a steel in which the content of C is 0.1 to 0.5 wt% and a hard oxide in contact with a sulfide composed of MnS and CaS is dispersed in a matrix; the hard oxide contains $Al_2O_3$ and CaO, provided that each content of said Cr and said V satisfies the following formula:

$$[Cr] + 1.97 \times [V] \geq 2.15$$

(where [ ] indicates wt% (wt/wt) of each element).

The present inventors have found that the hard oxide which contains $Al_2O_3$ and CaO and is in contact with the sulfide composed of MnS and CaS in the steel of the present invention functions as the free-machining component of sulfide form control type, and improves the grindability of the matrix itself outstandingly without deteriorating the anisotropy. The present inventors have also found that the above-described sulfide generates a tool protective sulfide film on the surface of a machining tool during cutting operation, whereby the life of the tool is greatly improved and its machinability is preferably improved. The use of the steel for the rocker arm allows various rocker arms to be manufactured at a low cost and with high productivity.

"The hard oxide in contact with the sulfide" described above may be any hard oxide as long as at least one part of the hard oxide is contacting with at least one part of sulfide. For example, the case where the surface of the hard oxide contacts that of the sulfide and the case where a part of or entire surface of the hard oxide is coated with a sulfide or a sulfide film are included.

The present inventors have found out that steel for a rocker arm containing C: 0.1 to 0.5% (wt/wt), Si: 0. 01 to 2. 5% (wt/wt), Mn:0.1 to 3.5% (wt/wt), P: 0. 001 to 0.2% (wt/wt), S: 0.01 to 0.2% (wt/wt), Cr: 1.0 to 3.5% (wt/wt), V: 0.1 to 0.5% (wt/wt), Al: 0.001 to 0.02% (wt/wt), Ca: 0.0005 to 0.02% (wt/wt), and O: 0.0005 to 0.01% (wt/wt) as basic components and the residue composed of Fe and unavoidable impurities, wherein the content of the elements Cr and V satisfies a formula of ([Cr]+1.97×[V]) ≧ 2.15% (wt/wt) facilitates the bond between Ca and O and accelerates the generation of the free-machining component of sulfide form control type by decreasing aluminum, thereby improvement of the machinability can be facilitated. The present inventors have also found that, by adjusting the amount of Cr and V to satisfy the above formula, it is possible to improve the softening-resistant property during nitriding treatment and preferably improve the surface hardness and nitrided layer depth after the steel is nitrided, thereby a superior nitriding property is provided.

The present inventors have also found that by adjusting the addition amount of elements C, Mn, S, and Cr contained in the steel for a rocker arm having the above basic components in such a way that the carbon equivalent Ceq indicated by the formula:([C]+0.27×([Mn]-55×[S]/32)+0.31×[Cr]+0.3×[V]) is set within the range of 0.8 to 1.1% (wt/wt), it is possible to form the structure of ferrite + bainite easily and adjust the inner hardness easily to 20 to 35 HRC when the steel is hot-forged and then allowed to cool. Thereby the steel is allowed to have both excellent machinability and favorable fatigue strength after nitriding treatment is performed, and therefore it is possible to manufacture the rocker arm of fine quality with high productivity.

It is also possible to improve hardenability, make crystalline grains fine, and make the sulfide fine by optionally adding one or more element(s) selected from Mo: ≦ 2.0% (wt/wt), Cu: ≦ 2.0% (wt/wt), Ni: ≦ 4.0% (wt/wt), B: 0.0005 to 0.01% (wt/wt), Nb: ≦ 0.2% (wt/wt), Ti: ≦ 0.2% (wt/wt), Ta: ≦ 0.5% (wt/wt), Zr: ≦ 0.5% (wt/wt), and Mg: ≦ 0.02% (wt/wt) to the above steel for a rocker arm.

The present inventors have also found that it is possible to easily form the untempered structure of ferrite + bainite formed after the hot-forged and allowed to cool having a strength equivalent to that of tempered steel, by adjusting the content of elements Mn, S and Cr to satisfy the formula:([Mn]-55×[S]/32+[Cr])>2.0 wt% when Mo is not included among the above elements, and by adjusting the content of the elements Mn, S, Cr and Mo to satisfy a formula:([Mn]-55×[S]/32+[Cr]+[Mo])>2.0 wt% when Mo is included, whereby a tempering process can be omitted.

The method of manufacturing steel for the rocker arm can be embodied by melting an alloy comprising alloy components specified as described above and the residue with a chemical composition composed of unavoidable impurities and Fe, provided that a content (wt%) of each of Mn, S, Cr, and Mo satisfies the formula: ([Mn]-55×[S]/32+ [Cr]+[Mo])>2.0 wt% and conducting the above operation in such a manner that the said alloy in a molten states satisfies the following conditions 1) through 3):

1) $[_HS]/[_HO]$: 8 to 80, where $[_HS]$ and $[_HO]$ indicate the activity of S and O defined by the formula shown below. $[_HS]=[S]×10^{logFs}$, and $[_HO]=[O]×10^{logFo}$

$[_HS]$ and $[_HO]$ indicate the activity of S and O defined by the formula shown below.

LogFs and logFo are defined by the following formula:

$$logFs=0.113[C]+0.065[Si]-0.025[Mn]+0.043[P]-0.028[S]-$$
$$0.013[Cu]-0.011[Cr]+0.0027[Mo]-0.27[O]+0.024[N]+$$
$$0.054[Al]$$

$$logFo=-0.44[C]-0.131[Si]-0.02[Mn]-0.147[P]+0.133[S]-$$
$$0.0095[Cu]+0.006[Ni]-0.041[Cr]+0.0035[Mo]-1.00[O]-$$
$$0.1834[N]-0.20[Al]+0.11[V]$$

2) [sol-Al]: 0.02 to 0.20% and
3) [Ca]×[S]: 1×10⁻⁵ to 1×10⁻³

where $[Ca]×[S]$: $1×10^{-5}$ to $1×10^{-3}$
(where [] indicates wt% of each element).

The present inventors have made various other studies and completed the present invention according to the claims on file.

The method of manufacturing the untempered steel according to the present claims (not part of the invention)

requires that each content of Mn, S, Cr, and Mo satisfies the formula: ([Mn]-55×[S]/32+[Cr]+[Mo])>2.0 (where [ ] indicates wt% (wt/wt) of each element), wherein an operation satisfying the following conditions 1) through 3) is performed:

1) $[_HS]/_HO]$: 8 to 80
where $[_HS]=[S]\times10^{logFs}$, and $[_HO]=[O]\times10^{logFo}$

$$logFs=0.113[C]+0.065[Si]-0.025[Mn]+0.043[P]-0.028[S]-$$

$$0.013[Cu]-0.011[Cr]+0.0027[Mo]-0.27[O]+0.024[N]+$$

$$0.054[Al]$$

$$logFo=-0.44[C]-0.131[Si]-0.02[Mn]-0.147[P]+0.133[S]-$$

$$0.0095[Cu]+0.006[Ni]-0.041[Cr]+0.0035[Mo]-1.00[O]-$$

$$0.1834[N]-0.20[Al]+0.11[V]$$

2) [sol-Al]: 0.02 to 0.20% and
3) [Ca] $\times$ [S] : $1\times10^{-5}$ to $1\times10^{-3}$.

Brief Description of the Drawings

Fig. 1 is a graph showing machinability of the free-machining steel of the present invention and a comparison steel and the relationship between $[_HS]$ and $[_HO]$, wherein non-nitrided steels having drilling efficiency (VL5000) of equivalent of or higher than that of free-machining steel containing 0.07% of Pb is denoted by (•) and those having drilling efficiency of lower than that of the free-machining steel containing 0.07% of Pb is denoted by (X) when drilling is conducted on the non-nitrided steel by a high-speed steel drill.
Fig. 2 is a graph showing the relationship between a surface hardness of nitrided free-machining steel of the present invention and nitrided comparison steel and drilling efficiency ratio, in which data of the steel of the present invention is shown by • and that of the comparison steel is shown with O.
Fig. 3 shows transition of a cutting resistance and a cutting torque in relation to the number of processes when a $\phi$16.5 opening is formed with a $\phi$16.5 drill.
Fig. 4 shows transition of a cutting resistance and a cutting torque in relation to the number of processes when a finish machining of a $\phi$18 opening is performed with a $\phi$18 reamer.
Fig. 5 shows a worn state of a cutting face of a tool when a $\phi$16.5 drill was used to process 700 workpieces.
Fig. 6 shows a nitrided layer depth (transition of sectional hardness) after nitriding treatment.
Fig. 7 shows the form of the free-machining component of sulfide form control type (background color is black to clarify the form).
Fig. 8 shows the result of a face analysis (mapping).
Fig. 9 shows the structure of an untempered steel cooled after hot forging is performed.
Fig. 10 shows transition of carbon of a $\phi$20 round rod cooled after hot forging is performed and an inner hardness thereof.
Fig. 11 shows the relationship between the structure of a JIS-14A specimen cooled after hot forging is performed and a yield strength $\sigma_{0.2}$.

Best Mode for Carrying Out the Invention

The reason for limiting the basic alloy composition of the to-be-nitrided bainite-type untempered steel of the present invention to the above weight percentages is as follows:

Carbon: 0.05% to 0.8%
Carbon is a necessary component for securing the strength of the steel. If the content of carbon is less than 0.05%, the steel has an insufficient strength. On the other hand, if the steel contains a large amount of carbon, the steel has low toughness and machinability. Therefore the upper limit of carbon is set to 0.8%.

Silicon: 0.01 to 2.5%

Silicon makes a component of the steel acting as a deoxidizing agent in an operation of melting an alloy and has a function of improving the hardenability. Thus, Si is necessary for untempered steel. This effect cannot be obtained if the content of Si is less than 0.01%. If a large amount of more than 2.5% of Si is added, ductility is lost and cracking tends to take place in plastic working.

Manganese: 0.1 to 3.5%

Manganese is an important element for generating a sulfide. If the content of manganese is 0.1%, the amount of the inclusion is insufficient. On the other hand, if the content of manganese exceeds 3.5%, the steel becomes hard and its machinability deteriorates.

Phosphorous: 0.001 to 0.2%

Phosphorous is positively contained at not less than 0.001% in the steel as a component for improving the machinability, particularly the property of a machined surface. However, phosphorous is disadvantageous for toughness. Thus phosphorous cannot be contained at 0.2% or more in the steel.

Sulfur: 0.01 to 0.2%

Because sulfur is a useful, or indispensable to be more accurate, component for improving the machinability of the steel, not less than 0.01% thereof is contained in the steel. If the content of the sulfur exceeds 0.2%, the steel loses its toughness and ductility, and the sulfur reacts with calcium to generate CaS. Since CaS has a high melting point, it presents obstacles to a casting process.

Chromium: 1.0 to 3.5%

To secure hardenability and hardness of a nitrided layer, not less than 1.0% of chromium is added to the steel. If a large amount of chromium is added, hot workability deteriorates and the steel cracks in a forging operation. Thus the upper limit of the addition amount of chromium is set at 3.5%.

Vanadium: 0.1 to 0.5%

To secure the softening-resistant property in nitriding treatment and allow a product to maintain the hardness of the surface layer thereof, at least 0.1% of V is added to the steel. When a large amount of V is added to the steel, the hardness of the steel increases and a yield strength ratio and a durability ratio decrease. Therefore the upper limit of the addition amount of V is set at 0.5%.

Aluminum: 0.001 to 0.020%

Aluminum is necessary for appropriately adjusting the composition of the oxide inclusion, thus not less than 0.001% of aluminum is added to the steel. The reason why the upper limit of aluminum is set at 0.2%, which is much lower that of the conventional nitrided steel, is that if the addition amount of aluminum exceeds 0.20%, an alumina cluster is generated and the machinability of the steel deteriorates. Calcium: 0.0005 to 0.02%

Calcium is a very important component for the steel of the present invention. To contain Ca in a sulfide, it is essential to add not less than 0.0005% of Ca. On the other hand, if not less than 0.02% of Ca is added, said calcium sulfide having a high melting point is formed. Calcium sulfide presents obstacles to a casting process.

Oxygen: 0.0005 to 0.01%

Oxygen is an element necessary for forming an oxide. A large amount of CaS having a high melting point is formed in steel excessively deoxidized and presents obstacles to a casting process. Therefore the addition of at least 0.0005% and preferably more than 0.0015% of oxygen to the steel is necessary. On the other hand, if more than 0.01% of O is added, a large amount of a hard oxide is formed, which deteriorates the machinability of the steel and makes it difficult to form a desired calcium sulfide.

$$\text{Formula: } ([Mn]-55\times[S]/32+[Cr])>2.0$$

The condition shown by the above formula must be satisfied to form the structure of the to-be-nitrided untempered steel not of pearlite but of the structure containing bainite as its main component and a small amount of ferrite. The structure containing the bainite as its main component which is only hot-forged has a strength almost equal to that of hardened and tempered steel even, and allows nitrogen to have a higher diffusion speed than a structure containing the pearlite as its main component. Therefore the structure containing the bainite as its main component has an advantage of faster nitriding speed.

In addition to the above-described basic alloy composition, the to-be-nitrided untempered free-machining steel of the present invention is capable of additionally containing one or more element (s) belonging to the following group in a specified composition range in dependence on a demand for a product. Description is made on the action of each alloy component which can be arbitrarily added in its altered form and the reason the composition range thereof is limited.

Molybdenum: 2.0% or less

Because molybdenum enhances the hardenability of the steel, a proper amount thereof should be added to the steel. On the other hand, if a large amount of Mo is added, hot workability deteriorates and the steel cracks during a forging operation. Taking the manufacturing cost into account, the upper limit of the addition amount of Mo is set at 2.0%. In adding Mo to the steel, the condition formula for obtaining the above bainite structure changes as follows:

$$([Mn]-55\times[S]/32+[Cr]+[Mo])>2.0$$

Copper: 2.0% or less

Copper makes the structure of the steel dense and increases its strength. The addition of a large amount of Cu is not preferable for both the hot workability and the machinability, thus upper limit of the addition of Cu is set at 2.0%.

Nickel: 4.0% or less

Similarly to Cr and Mo, Ni also enhances the hardenability, but is disadvantageous for the machinability of the steel. Taking this disadvantage and the manufacturing cost into account, the upper limit of the addition amount of Ni is set at 4.0%.

Boron: 0.0005 to 0.01%

The hardenability can be enhanced by the addition of a slight amount of B. To obtain this effect, it is necessary to add not less than 0.0005% of B to the steel. It is disadvantageous to add more than 0.01% of B to the steel because the hot workability deteriorates.

One or two selected from Nb: 0.2% or less and Ti: 0.2% or less

Nb and Ti are useful for preventing crystalline grains from becoming coarse at a high temperature. The extent of the effect is maximized and does not change with an increase of the amount thereof. Thus it is advisable to add them at 0.2% or less.

Tantalum: 0.5% or less, zirconium: 0.5% or less, manganese: 0.02% or less

These elements have an action of making crystalline grains fine and improving the toughness of the steel. Thus it is preferable to add one or more of these elements to the steel. It is advisable to add the element(s) up to the upper limit of 0.5%, at which the extent of the effect is maximized and does not change even though more than 0.5% thereof is added.

Lead: 0.4% or less, bismuth: 0.4% or less, selenium: 0.4% or less, and tellurium: 0.2% or less

Each of these elements has an action of improving the machinability. Lead is present independently or attaches to the periphery of a sulfide, and lead itself improves the machinability. The upper limit of 0.4% is determined for the reason that, if not less than 0.4% of Pb is added it is not dissolved in the steel but is aggregated and deposited, making the steel defective. The same reason is applied to Bismuth. The upper limit of the addition amount of each of selenium and tellurium is set in consideration of bad influence on hot workability.

The inclusion present inside the to-be-nitrided untempered free-machining steel according to the present invention has a double structure, as described above. An analysis made by EPMA (JXA8800 manufactured by Nippon Denshi Kabushiki Kaisha) proved that the core of the inclusion is composed of an oxide of each Ca, Mg. Si, and Al, and Manganese sulfide containing CaS surrounds the core. The presence form of the inclusion is that the occupation area of the sulfide inclusion present in contact with the oxide inclusion containing 8 to 62 wt% of CaO and containing not less than 1.0 wt% of Ca is not less than $2.0\times10^{-4}mm^2$ per visual field area of $3.5mm^2$. Such a form of the inclusion is necessary to achieve a high machinability targeted in the present invention through a mechanism which will be described later. The condition for realizing such a form of the inclusion becomes the operation condition for the said manufacture. The significance of the condition is described below.

1) $[_HS]/[_HO]$: 8 to 80

where $[_HS]$ and $[_HO]$ indicate the activity of S and O defined by the formula shown below.

$[_HS]=[S]\times10^{logFs}$, and $[_HO]=[O]\times10^{logFo}$

logFs and logFo are defined by the formula shown below:

$$logFs=0.113[C]+0.065[Si]-0.025[Mn]+0.043[P]-0.028[S]-$$
$$0.013[Cu]-0.011[Cr]+0.0027[Mo]-0.27[O]+0.024[N]+$$
$$0.054[Al]$$

$$logFo=-0.44[C]-0.131[Si]-0.02[Mn]-0.147[P]+0.133[S]-$$
$$0.0095[Cu]+0.006[Ni]-0.041[Cr]+0.0035[Mo]-1.00[O]-$$
$$0.1834[N]-0.20[Al]+0.11[V]$$

2) [sol-Al]: 0.02 to 0.20% and
3) [Ca] $\times$ [S] : $1 \times 10^{-5}$ to $1 \times 10^{-3}$

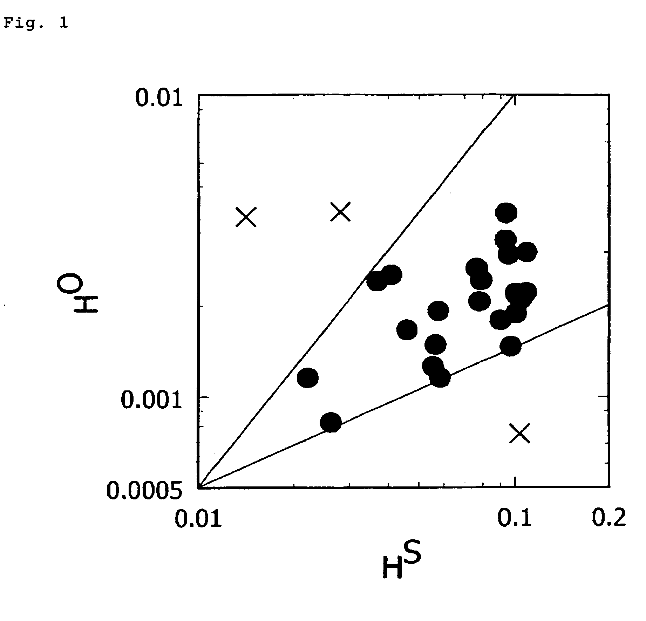

Data obtained from experiments relating to the condition 1) is as shown in Fig. 1. The graph of Fig. 1 shows the plotted relationship between $[_HS]$ and $[_HO]$ in nitrided steel having not less than 1 drilling efficiency ratio to that of the material before nitrided (•), and nitrided steel having less than 1 drilling efficiency ratio to that of the material before nitrided (X) . The word "drilling efficiency ratio" is defined as a value obtained by comparing processability of steel for which a high-speed steel drill is used with processability of a conventional Al-Cr nitrided steel whose machinability has been improved by adding 0.07% of Pb thereto. Fig. 1 indicates that when the activity of S and that of O are combined at an appropriate ratio, preferable machinability can be obtained.

The present inventors think that the reason for the to-be-nitrided bainite-type untempered steel of the present invention showing excellent machinability is the below-mentioned favorable protection of the surface of a tool and the lubricating mechanism due to the free-machining component of sulfide form control type.

As described above, the core of the free-machining component of sulfide form control type is composed of a $CaO \cdot Al_2O_3$-based composite oxide surrounded with a (Ca, Mn)S-based composite sulfide. Among the $CaO-Al_2O_3$-based composite oxides, the said oxide has a low melting point, while the said composite sulfide has a higher melting point than a simple sulfide MnS. In the free-machining component of sulfide form control type, the sulfide securely deposits with the sulfide surrounding the oxide when the oxide is composed of the $CaO-Al_2O_3$-based oxide having a low melting point. It is well known that in a cutting operation, a sulfide inclusion melts and coats, thus protecting the surface of a tool, however, in case only the sulfide is present, the formation and maintenance of a formed coating are unstable. The present inventors have found that when the $CaO-Al_2O_3$-based oxide having a low melting point is present together with the sulfide inclusion, the coating is formed stably, and the (Ca, Mn)S-based composite sulfide has higher lubricating property than a simple MnS.

The significance of the coating the (Ca, Mn)S-based composite sulfide forms on the surface of the tool is admitted most clearly in cutting made by a carbide tool. That is, significance of the coating is wear-suppressing effect of a carbide tool called "thermal diffusion wear". Describing the thermal diffusion wear, when the tool contacts chip generated from a workpiece at a high temperature, a carbide represented by tungsten-carbide constructing the material of the tool is thermally decomposed. As a result, C is lost by diffusing into the metal of the chip and thus the tool becomes frail, which makes wear progress. Temperature rise of the tool is prevented by the coating having high lubricating property formed on the surface of the tool, thereby diffusion of C is suppressed.

In a different point of view, it can be said that the free-machining component of sulfide form control type $CaO-Al_2O_3/(Ca, Mn)S$ of the free-machining steel according to the present invention has both advantages of MnS which is the inclusion of the conventional sulfur free-machining steel and anorthite $CaO \cdot Al_2O_3 \cdot 2SiO_2$ which is the inclusion of the conventional calcium free-machining steel. The MnS on the surface of the tool shows lubricating property but the stability of the coating is not sufficient. Thus it is vulnerable to the thermal diffusion wear. The $CaO \cdot Al_2O_3 \cdot 2SiO_2$ prevents the thermal diffusion wear by forming a stable coating, but has low lubricating property. On the other hand, the free-machining component of sulfide form control type according to the present invention effectively prevents the thermal diffusion wear by forming a stable coating and shows favorable lubricating property.

The generation of the free-machining component of sulfide form control type starts from preparation of the composite oxide having a low melting point as described above, so the amount of aluminum is important, and at least 0.001 wt% of the Al is necessary. The amount of Al should be 0.020 wt% or less, because, if the amount of Al is too much, the melting point of the composite oxide becomes high. To adjust the generation amount of CaS, [Ca]$\times$[S] and [Ca]/[S] are adjusted to the above-described values.

As described later, the steel for a rocker arm of the present invention has machinability equivalent to that of the known Pb free-machining steel, nitriding property superior in a nitrided layer depth or the like, and a strength equal to that of the known tempered steel, although the steel is not tempered. To manufacture the steel for a rocker arm having the said properties, an alloy having alloy components specified as will be described later and the residue having a chemical composition composed of unavoidable impurities and Fe, wherein wt% of each of Mn, S, Cr and Mo of the alloy is required to satisfy the formula:

$$([Mn]-55\times[S]/32+[Cr]+[Mo])>2.0\% \ (wt/wt)$$

(where [ ] indicates wt% (wt/wt) of each element of the alloy) is melted.
In the above, the operation is carried out in the way that the alloy in molten states satisfies the following conditions 1) through 3):

1) $[_HS]/[_HO]$: 8 to 80
where $[_HS]$ and $[_HO]$ indicate the activity of S and O respectively as defined by the following formulas:

$$[_HS]=[S]\times10^{logFs} \ and \ [_HO]=[O]\times10^{logFo}$$

where logFs and logFo are defined by the following formulas:

$$logFs=0.113[C]+0.065[Si]-0.025[Mn]+0.043[P]-0.028[S]-$$
$$0.013[Cu]-0.011[Cr]+0.0027[Mo]-0.27[O]+0.024[N]+$$
$$0.054[Al]$$

$$logFo=-0.44[C]-0.131[Si]-0.02[Mn]-0.147[P]+0.133[S]-$$
$$0.0095[Cu]+0.006[Ni]-0.041[Cr]+0.0035[Mo]-1.00[O]-$$
$$0.1834[N]-0.20[Al]+0.11[V]$$

2) [sol-Al]: 0.02 to 0.20% and
3) $[Ca]\times[S]$ : $1\times10^{-5}$ to $1\times10^{-3}$
(where [ ] indicates wt% (wt/wt) of each element). Other conditions are allowed to conform to the condition similar to that for the known alloy steel. For example, an ingot-making method or a continuous casting method may be used for the production.

Description is made below on the reason for controlling the form and the chemical composition of the hard oxide in contact with the sulfide which is the inclusion of the steel for a rocker arm of the present invention.
Hereinafter, the content (%) of each element is indicated by wt%.
With regard to the hard oxide in contact with the sulfide, the ratio of the content of CaO to the entire hard oxide (for example, $CaO \cdot Al_2O_3$-based oxide) is 8.0 to 62%. The ratio of the content of Ca to the entire sulfide is 1.0 to 45%. The occupation area of the sulfide in the entire steel is $2.0 \times 10^{-4}mm^2$ to $1.0\times10^{-1}mm^2$ per $3.5mm^2$, which can be confirmed by face analysis using an electron microscope EPMA (JXA8800 manufactured by Nippon Denshi Kabushiki Kaisha).
When the content of the Ca is not less than 1.0%, a tool protection coating of (Ca·Mn)S is formed sufficiently on the surface of a tool when a cutting operation is performed, thereby desired machinability can be obtained. In the steel composed of the above-described chemical composition, the sulfide contains MnS as its main component, and CaS is formed by substituting a part of Mn with Ca. It is necessary, however, to prevent the sulfide from having various properties in dependence on the extent of the substitution of Mn with Ca and prevent the formation of the tool protection coating from being difficult. To obtain desired machinability, it is preferable to adjust the content of the Ca to not more than 45%.

According to the present invention, when Mn and Ca are added in the amount within the range of above-described composition, it is possible to improve the life of the tool and obtain both superior machinability and castability. To improve the machinability, the occupation area of the sulfide in the steel is preferably not less than $2.0 \times 10^{-4}$mm$^2$ per 3.5mm$^2$ and more preferably not more than $1.0 \times 10^{-1}$mm$^2$ per 3.5mm$^2$ to also obtain superior castability.

Also, when Ca, Al and O are contained within the range of above-described composition, it is possible to adjust the generation amount of CaO oxide to a specified range and prevent generation of a large amount of CaS having a high melting point which deteriorates castability. Thereby it is possible to form the free-machining component of sulfide form control type whose anisotropy does not deteriorate and which has excellent machinability. To obtain machinability to a higher extent, it is preferable to set the content of the CaO in the entire hard oxide to not less than 8.0%. To prevent deterioration of castability, it is preferable to set the content of the CaO in the entire hard oxide to not more than 62%.

The chemical composition of each of the elements contained in the steel for a rocker arm of the present invention is described below.

Carbon: 0.1 to 0.5%

Carbon is a necessary component for securing the strength of the steel. To allow the steel to securely obtain a higher strength, not less than 0. 1% of carbon is necessary. To avoid decrease of the toughness and machinability of the steel, it is preferable to set the content of carbon to at 0.5% or less.

Silicon: 0.01 to 2.5%

Silicon is contained as a deoxidizing agent in a melting operation. In addition, Si has an action of improving the hardenability. To secure preferable hardenability, it is necessary to add not less than 0.01% of Si to the steel. To secure superior ductility and prevent the steel from cracking in plastic working, it is preferable to add not more than 2.5% of Si to the steel.

Manganese: 0.1 to 3.5%

Manganese is an element for forming the free-machining component of sulfide form control type. To form better free-machining component, it is preferable to add not less than 0.1% of Mn to the steel. To obtain superior machinability, it is preferable to add not more than 3.5% of Mn to the steel.

Phosphorous: 0.001 to 0.2%

Phosphorous is added to the steel to improve the machinability, and particularly the property of the machined surface of the steel. To improve the machinability and the property of the machined surface of the steel to a higher extent, it is preferable to add not less than 0.001% of P to the steel. To allow the steel to have a higher ductility, it is preferable to add not more than 0.2% of P to the steel.

Sulfur: 0.01 to 0.2%

Sulfur is an element for forming the free-machining component of sulfide form control type. To form better free-machining components, it is preferable to add not less than 0.01% of S to the steel. To obtain superior machinability, it is preferable to add not more than 0.2% of S to the steel.

Chromium: 1.0 to 3.5%

Chromium is an element effective for improving hardenability and securing surface hardness, depth, and softening-resistant property in nitriding treatment by an appropriate combination of the addition amount of Cr with that of V. To allow the steel to have the said better properties, it is preferable to add not less than 1.0% of Cr. To manufacture the steel at a low cost and prevent cracking of the steel in a hot working operation, it is more preferable that the addition amount of Cr is not more than 3.5%.

Vanadium: 0.1 to 0.5%

Vanadium is an element effective for securing surface hardness, depth, and softening-resistant property in nitriding treatment by an appropriate combination of the addition amount of Cr with that of V. The V combines with C and N to form a carbonitride and has the effect of making crystalline grains fine. To secure the softening-resistant property in the nitriding treatment, it is preferable to add not less than 0.1% of V to the steel. To reduce the manufacturing cost, it is preferable to add not more than 0.5% of V.

Aluminum: 0.001 to 0.02%

Aluminum is an element necessary for deoxidization. To obtain sufficient deoxidizing effect, addition of not less than 0.001% of Al is preferable. The addition of not more than 0.02% of Al is preferable to prevent generation of a hard alumina cluster which deteriorates the machinability of the steel, makes it difficult to form the free-machining component of sulfide form control type, and deteriorates the anisotropy of the steel.

Calcium: 0.0005 to 0.02%

Calcium is an element very important for the steel of the present invention. Ca is an element for forming the free-machining component of sulfide form control type. To obtain superior effect of Ca, it is preferable to add not less than 0.0005% of Ca to the steel. To prevent formation of an excessive amount of CaS having a high melting point due to the excessive addition of Ca, it is preferable to add not more than 0.02% of Ca to the steel.

Oxygen: 0.0005 to 0.01%

Oxygen is an element necessary for forming an oxide in the free-machining component of sulfide form control type. To form a preferable oxide, the addition of not less than 0.0005% of O is preferable. To form a more preferable oxide, the addition of not less than 0.0015% is preferable. To form a Ca sulfide in the free-machining component of sulfide form control type and also allow the steel to have favorable machinability, the addition of less than 0.01% of O is preferable.

In addition to the above-described components, one or not less than two elements selected from Mo, Cu, Ni, and B may be added to the steel for a rocker arm of the present invention. In addition to these elements, one or two elements selected from Nb and Ti and one or more element (s) selected from Ta, Zr and Mg may be added to the steel. These elements of alloy may be contained in the steel of the present invention in various combinations in dependence on purpose. The effect of these elements of alloy and the reason for controlling the content thereof will be described below.

Molybdenum: $\leqq 2.0\%$

Similarly to Cr, molybdenum is an effective element for improving hardenability. It is preferable to add not more than 2.0% of Mo to allow the steel to be manufactured at a low cost, to be highly machinable, and improve hot workability.

Copper: $\leqq 2.0\%$

Copper is an element effective for making the structure of the steel dense and increasing its strength. It is preferable to add not more than 2.0% of Co to allow the steel to be highly machinable and improve hot workability.

Nickel: $\leqq 4.0\%$

Similarly to Cr, Ni is an effective element for improving the hardenability of the steel. It is preferable to add not more than 4.0% of Ni to allow the steel to be manufactured at a low cost and to be highly machinable.

Boron: 0.0005 to 0.01%

The hardenability of the steel can be enhanced by the addition of a slight amount of B. To obtain better hardenability, it is preferable to add not less than 0.0005% of B to the steel. It is preferable to add not more than 0.01% of B to improve the hot workability and prevent crystalline grains from becoming coarse.

Niobium: $\leqq 0.2\%$

Nb is an effective element for preventing crystalline grains from becoming coarse at high temperatures. It is preferable to add not more than 0.2% of Nb to manufacture the steel at a low cost and also obtain a higher effect.
Titanium: $\leqq 0.2\%$
Ti combines with N in nitriding treatment to form TiN, thus allowing B to display hardenability-improving effect.

It is preferable to add not more than 0.2% of Nb to form TiN favorably and improve the hot workability.

Tantalum: ≦0.5%

Ta is an element effective for making crystalline grains fine and improving the toughness of the steel. It is preferable to add not less than 0.5% of Ta to manufacture the steel at a low cost and also obtain higher effect.

Zirconium: ≦0.5%

Zr has properties similar to that of Ta, and is an effective element for making crystalline grains fine and improving the toughness of the steel. It is preferable to add not more than 0.5% of Zr to manufacture the steel at a low cost and also obtain higher effect.

Magnesium: ≦ 0.02%

Mg has properties similar to that of Ta and Zr, and is an effective element for making crystalline grains fine and improving the toughness of the steel. It is preferable to add not more than 0.02% of Mg to manufacture the steel at a low cost and also obtain higher effect.

As the control (1) of the chemical component, the content of Cr and V are adjusted to satisfy the formula of $([Cr]+1.97\times[V])\geqq2.15\%$ (wt/wt).

In performing nitriding treatment of the steel for a rocker arm of the present invention, the content of Cr and V are adjusted to satisfy the formula of $([Cr]+1.97\times[V]) \geqq 2.15$ wt%. Thereby the surface hardness of not less than 750 HV is obtained in a gas nitrocarburizing condition (for example, 580°C×3hr) and the nitrided layer depth and the softening-resistant property in the nitriding treatment can be preferably improved. That is, the steel is allowed to have a preferable nitriding property.

As the control (2) of the chemical component, the content of Mn, S, and Cr are adjusted to satisfy the formula of $([Mn]-55\times[S]/32+[Cr])>2.0$ wt% or the content of Mn, S, Cr, and Mo are adjusted to satisfy the formula of $([Mn]-55\times[S]/32+[Cr]+[Mo])>2.0$ wt%.

To further improve productivity in manufacturing a rocker arm product from the steel for a rocker arm of the present invention, it is preferable to form the structure of the untempered ferrite + bainite which is formed after the hot-forged steel is cooled and which has a strength almost equal to that of the tempered steel. By adjusting the content of the elements Mn, S, and Cr or the content of the elements Mn, S, Cr, and Mo to satisfy the above formula, the steel is allowed to have a favorable structure after hot forging is carried out.

To control the carbon equivalent Ceq indicated by $([C]+0.27\times([Mn]-55\times[S]/32)+0.31\times[Cr]+0.3\times[V])$, the Ceq is adjusted within the range of 0.8 to 1.1 wt%.

Further, the present inventors have found that to allow the rocker arm product to have superior machinability and preferable fatigue strength after nitriding treatment is performed in manufacturing the rocker arm product by hot forging from the steel for a rocker arm of the present invention, it is preferable to set the inner hardness of the steel within the range of 20 to 35 HRC, supposing that a test is conducted in accordance with JIS;Z2245. The said inner hardness can be easily obtained by adjusting the content of C, Mn, S, Cr, and V in the steel for a rocker arm having above-mentioned basic components within the above range of Ceq.

Examples

Examples A1 to A17 and Comparison Examples a1 to a8

In examples A1 to A17 and comparison examples a1 to a8, steels each having an alloy composition shown in tables 1 and 2 were melted in a 5-ton arc furnace to cast them into ingots. To form hard oxides covered with sulfide coatings in melting the steels, the content of elements S, Al, Ca, and O in each steel was adjusted to values shown in tables 1 and 2 using an FS shot, a CaSi shot, and an Al shot as a sulfur source, a calcium source, and an aluminum source respectively. Each ingot was hot-forged to a round rod having a diameter of 15mm or 22mm. In addition to the composition of each alloy, the value of each of $[_HS]/[_HO],[Ca]\times[S]$, and $[Ca]/[S]$ is shown in tables 1 and 2.

| Alloy Composition (wt% remaining part: Fe) Example | | | | | | | | | | | | | | |
|---|---|---|---|---|---|---|---|---|---|---|---|---|---|---|
| No. | C | Si | Mn | P | S | Cr | V | Al | O | Ca | misc. | $_H S/_n O$ | [Ca]x [S] | [Ca]x [S] |
| A1 | 0.21 | 0.24 | 0.67 | 0.013 | 0.102 | 2.00 | 0.19 | 0.005 | 0.0030 | 0.0021 | Mo0.02 | 52.2 | 21.4 | 0.021 |
| A2 | 0.22 | 0.24 | 0.88 | 0.014 | 0.111 | 1.82 | 0.20 | 0.006 | 0.0048 | 0.0019 | Mo0.02 | 35.4 4 | 21.1 | 0.017 |
| A3 | 0.17 | 0.26 | 0.67 | 0.017 | 0.104 | 1.99 | 0.20 | 0.007 | 0.0033 | 0.0015 | Mo0.02 | 46.4 | 15.6 | 0.014 |
| A4 | 0.17 | 0.25 | 0.67 | 0.015 | 0.097 | 1.99 | 0.15 | 0.006 | 0.0046 | 0.0024 | Mo0.02 | 31.4 | 23.3 | 0.025 |
| A5 | 0.16 | 0.26 | 0.56 | 0.014 | 0.094 | 1.80 | 0.15 | 0.008 | 0.0050 | 0.0024 | Mo0.02 | 27.5 | 22.6 | 0.026 |
| A6 | 0.25 | 0.29 | 0.71 | 0.009 | 0.075 | 1.61 | 0.18 | 0.015 | 0.0044 | 0.0022 | Mo0.02 | 27.9 | 38.3 | 0.068 |
| A7 | 0.30 | 0.27 | 0.52 | 0.011 | 0.025 | 1.55 | 0.20 | 0.015 | 0.0014 | 0.0027 | Mo0.02 | 31.1 | 10.0 | 0.160 |
| A8 | 0.16 | 0.26 | 0.56 | 0.015 | 0.095 | 2.00 | 0.14 | 0.008 | 0.0063 | 0.0025 | Mo0.02 | 22.5 | 23.8 | 0.026 |
| A9 | 0.30 | 0.25 | 0.67 | 0.009 | 0.054 | 1.61 | 0.30 | 0.014 | 0.0021 | 0.0020 | Mo0.02 | 42.8 | 23.8 | 0.081 |
| A10 | 0.15 | 0.31 | 0.50 | 0.009 | 0.057 | 2.41 | 0.15 | 0.011 | 0.0024 | 0.0033 | Mo0.02 | 37.0 | 10.8 | 0.033 |
| A11 | 0.15 | 0.23 | 0.60 | 0.014 | 0.111 | 1.91 | 0.15 | 0.008 | 0.0033 | 0.0034 | Mo0.02 | 47.9 | 37.7 | 0.031 |
| A12 | 0.15 | 0.23 | 0.60 | 0.014 | 0.107 | 1.91 | 0.18 | 0.006 | 0.0031 | 0.0033 | Moo.02 | 48.8 | 35.3 | 0.031 |
| A13 | 0.20 | 0.35 | 0.50 | 0.022 | 0.057 | 1.91 | 0.15 | 0.0010 | 0.0019 | 0.0030 | Mo0.02 Mg0.0024 Ti0.0057 | 49.2 | 17.1 | 0.053 |

| Alloy Composition (wt % remaining part: Fe) Example | | | | | | | | | | | | | | |
|------|------|------|------|-------|-------|------|------|-------|--------|--------|-------------------|-------|---------|----------|
| No. | C | Si | Mn | P | S | Cr | V | Al | O | Ca | misc. | HS/H0 | [Ca]x [S] | [Ca]/ [S] |
| A 14 | 0.20 | 0.24 | 0.64 | 0.025 | 0.097 | 1.82 | 0.15 | 0.009 | 0. 0023 | 0.0027 | Mo0.02 Ti0.0071 | 64.4 | 65.0 | 0.069 |
| A 15 | 0.20 | 0.24 | 0.65 | 0.014 | 0.041 | 1.91 | 0.15 | 0.013 | 0.0041 | 0.0021 | Mo0.02 Mg0.0033 | 15.7 | 8.6 | 0.051 |
| A 16 | 0.20 | 0.24 | 0.65 | 0.011 | 0.037 | 1.91 | 0.15 | 0.010 | 0. 0039 | 0.0051 | Mo0.02 Mg0.0022 | 14.9 | 18.9 | 0.138 |
| A 17 | 0.21 | 0.25 | 0.67 | 0.027 | 0.022 | 1.89 | 0.15 | 0.012 | 0.0019 | 0.0018 | Mo0.02 | 18.6 | 3.9 | 0.082 |

| Alloy Composition(wt % remaining part: Fe) Comparison Example | | | | | | | | | | | | | | |
|------|------|------|------|-------|-------|------|------|-------|--------|--------|--------------------------------|-------|--------|---------|
| No. | C | Si | Mn | P | S | Cr | V | Al | O | Ca | misc. | HS/H0 | [Ca]x [S] | [Ca]/ [S] |
| a 1 | 0.19 | 0.24 | 0.67 | 0.010 | 0.100 | 1.21 | 0.30 | 0.009 | 0.0031 | 0.0031 | Mo0.02 | 44.4 | 31.0 | 0.031 |
| a 2 | 0.21 | 0.25 | 0.67 | 0.014 | 0.045 | 1.21 | 0.20 | 0.007 | 0.0025 | 0.0024 | Mo0.02 | 26.8 | 10.8 | 0.053 |
| a 3 | 0.21 | 0.25 | 0.68 | 0.009 | 0.090 | 1.64 | 0.07 | 0.006 | 0.0029 | 0.0019 | Mo0.20 | 49.1 | 17.1 | 0.021 |
| a 4 | 0.33 | 0.27 | 0.99 | 0.010 | 0.025 | 1.01 | - | 1.090 | 0.0014 | 0. 0002 | Mo0.02 Pb0.07 | 58.7 | 0. 5 | 0.008 |
| a 5 | 0.35 | 0.31 | 0.65 | 0.011 | 0.099 | 1.81 | 0.18 | 0.013 | 0.0014 | 0.0009 | Mo0.02 Ti0.0092 | 133.8 | 8.9 | 0.009 |
| a 6 | 0.20 | 0. 30 | 0.65 | 0.011 | 0.014 | 1.81 | 0.15 | 0.014 | 0.0066 | 0.0007 | Mo0.02 Mg0.0 019 Ti0.0060 | 3.5 | 0.9 | 0.050 |
| a 7 | 0.20 | 0.25 | 0.65 | 0.011 | 0.028 | 1.81 | 0.15 | 0.008 | 0.0067 | 0.0081 | Mo0.02 Mg0.0 030 | 6.6 | 22.7 | 0.289 |
| a 8 | 0.21 | 0.22 | 0.25 | 0.014 | 0.071 | 1.64 | 0.20 | 0.010 | 0.0037 | 0.0020 | Mo0.02 | 31.5 | 15.4 | 0.026 |

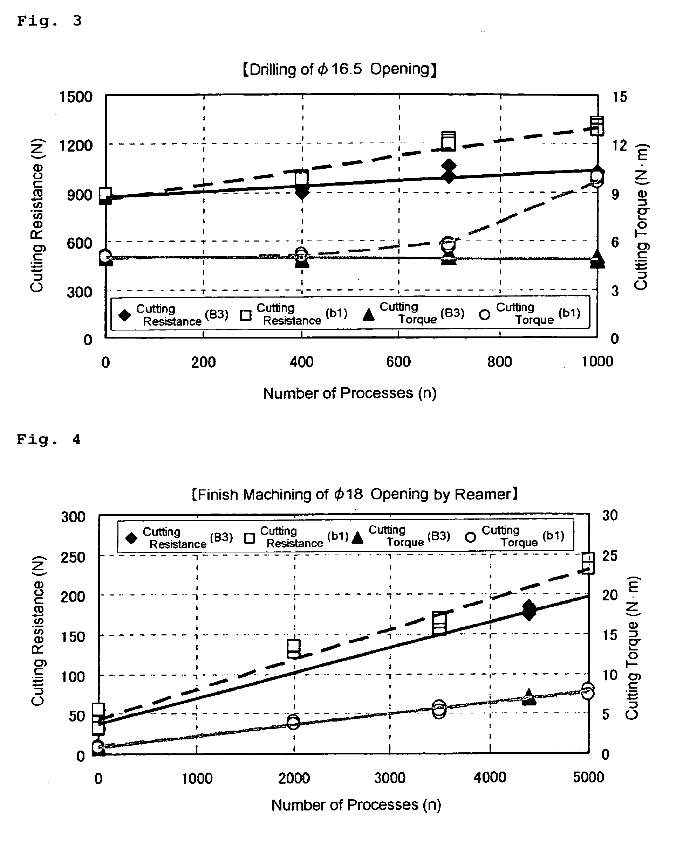

Hot-forged steels were allowed to air-cooled and then gas-nitrided at 580˚C for three hours. The surface hardness (HV) of each nitrided steel, the depth of hardened layer (depth of layer having hardness not less than 450HV) thereof, the hardness (HRC) of the core thereof, and the ductility thereof were measured. Figs. 3 and 4 show the results and machinability (indicated by drilling efficiency ratio mentioned above).

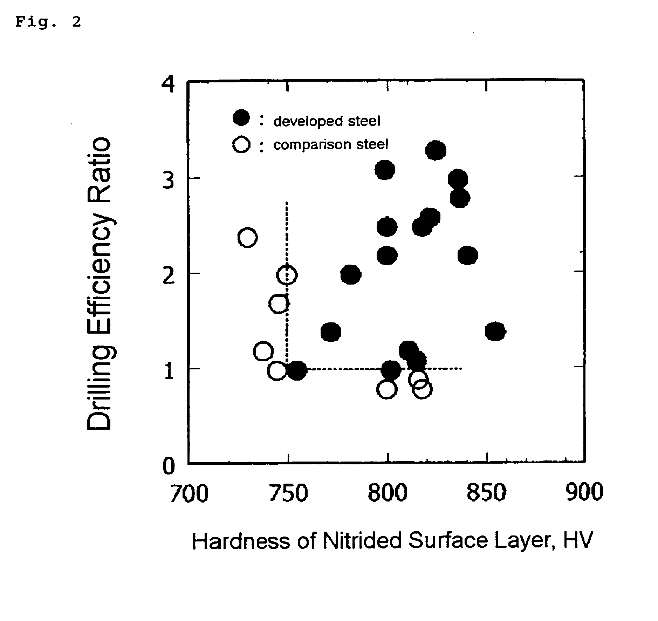

The relationship between the surface hardness of each nitrided steel after nitriding and the drilling efficiency ratio thereof was plotted. Fig. 2 shows the results. A nitride product of the steel of the present invention achieved the target surface hardness of not less than 750 HV and secured 1 in the drilling efficiency ratio. Some nitrided steels excellent in the machinability thereof showed more than 3 in the drilling efficiency ratio, achieving high machinability.

Table 3

| | | | Test Result Example | | | | |
|---|---|---|---|---|---|---|---|
| No. | Surface-Layer Hardness Hv | Depth of Hardened Layer mm | $\phi$15 core Hardness HRC | $\phi$ 22 core Hardness HRC | Ductility | Nitriding Property | machinability |
| A 1 | 836 | 0.216 | 32.1 | 30.9 | ○ | ○ | 2.8 |
| A 2 | 798 | 0.203 | 30.4 | 29.3 | ○ | ○ | 3.1 |
| A 3 | 835 | 0.214 | 28.0 | 27.2 | ○ | ○ | 3.0 |
| A 4 | 817 | 0.207 | 28.6 | 27.1 | ○ | ○ | 2.5 |
| A 5 | 799 | 0.210 | 24.9 | 23.0 | ○ | ○ | 2.5 |
| A 6 | 781 | 0.198 | 28.1 | 26.5 | ○ | ○ | 2.0 |
| A 7 | 754 | 0.197 | 28.4 | 26.9 | ○ | ○ | 1.0 |
| A 8 | 840 | 0.205 | 25.6 | 23.8 | ○ | ○ | 2.2 |
| A 9 | 771 | 0.202 | 31.6 | 30.8 | ○ | ○ | 1.4 |
| A 10 | 854 | 0.209 | 31.8 | 31.1 | ○ | ○ | 1.4 |
| A 11 | 824 | 0.214 | 25.8 | 21.4 | ○ | ○ | 3.3 |
| A 12 | 821 | 0.211 | 26.1 | 24.8 | ○ | ○ | 2.6 |
| A 13 | 810 | 0.207 | 27.5 | 25.7 | ○ | ○ | 1.2 |
| A 14 | 799 | 0.204 | 27.1 | 25.3 | ○ | ○ | 2.2 |
| A 15 | 814 | 0.203 | 29.5 | 28.2 | ○ | ○ | 1.1 |
| A 16 | 801 | 0.202 | 29.5 | 28.3 | ○ | ○ | 1.0 |
| A 17 | 801 | 0.200 | 28.7 | 28.4 | ○ | ○ | 1.0 |

Table 4

| Test Result | | | Comparison Example | | | | |
|---|---|---|---|---|---|---|---|
| No. | Surface-Layer Hardness Hv | Depth of Hardened Layer mm | $\phi$15 core Hardness HRC | $\phi$22 core Hardness HRC | Ductility | Nitriding Property | machinability |
| a 1 | 749 | 0.204 | 21.0 | 18.4 | × | × | 2.0 |
| a 2 | 737 | 0.206 | 21.6 | 18.7 | × | × | 1.2 |
| a 3 | 729 | 0.200 | 28.5 | 26.4 | ○ | × | 2.4 |
| a 4 | 744 | 0.177 | 28.1 | 28.7 | × | × | - |
| a 5 | 815 | 0.194 | 33.0 | 33.4 | ○ | ○ | 0.9 |

(continued)

| | Test Result | | Comparison Example | | | | |
| No. | Surface-Layer Hardness Hv | Depth of Hardened Layer mm | $\phi$15 core Hardness HRC | $\phi$22 core Hardness HRC | Ductility | Nitriding Property | machinability |
|---|---|---|---|---|---|---|---|
| a 6 | 817 | 0.199 | 28.7 | 27.2 | ○ | ○ | 0.8 |
| a 7 | 799 | 0.215 | 29.5 | 26.2 | ○ | ○ | 0.8 |
| a 8 | 745 | 0.211 | 20. 9 | 19.1 1 | × | × | 1.7 |

Examples B1 to B17 and Comparison Examples b1 to b3

The steel for a rocker arm of the present invention will be described below in conjunction with the following examples.

Steels each having a chemical composition shown in tables 5 and 6 were melted in a 5-ton arc furnace or a 150kg high-frequency vacuum induction furnace. To form a hard oxide in contact with a sulfide, FeS grains, CaSi grains, and Al grains were used as a sulfur source, a calcium source, and an aluminum source respectively. The content of S, Al, Ca, and O in each steel was adjusted to values shown in tables 5 and 6. Each of obtained ingots was rolled or forged to a round rod having a diameter of 25mm. The steels shown in table 6 were examined after nitriding treatment was conducted. With regard to the comparison steels, an SCr435HL steel (comparison steel; b1) shown in table 5 was adopted to examine the machinability of each steel, and an SAC430AL steel (comparison steel; b2) shown in table 6 was adopted and to examine the nitriding property of each steel.

Firstly, to evaluate the machinability of the steel of the present invention, the machinability of the steel of the present invention was compared with the cutting resistance and cutting torque of the known SCr435HL steel containing 0.2% of Pb serving as a free-machining component in the same cutting condition. The wear degree of a tool in a cutting operation was evaluated by comparing the observation of the wear state of the cutting face of the tool after the cutting operation finished. The smaller the value of the cutting resistance and the cutting torque are in relation to the SCr435HL steel, the better the machinability of the steel is. Also, the lower the wear degree of the tool is, the better the machinability of the steel is. Thus, synthetic evaluation of the machinability of the steel of the present invention shown in Table 5 is judged based on the above-described determining method.

To obtain data of the cutting resistance and the cutting torque shown in table 5, a commercially-available rotary cutting dynamometer (9123C manufactured by Kisler Inc.) was mounted on a spindle of NC milling machine (VF-Center manufactured by Enshu Seisakusho) which is a commonly used machine, and cutting processing was carried out with a $\phi$16.5 drill provided on a chucking portion of the said rotary cutting dynamometer when a $\phi$16.5 opening was formed and with a $\phi$18 reamer provided on the chucking portion thereof to perform finish machining of a $\phi$18 opening. A voltage output value obtained from the rotary cutting dynamometer was measured in each cutting operation. As the cutting conditions, in the drilling operation performed with $\phi$16.5 drill, rotational frequency of the spindle: 2500 rpm, feeding amount: 150m/min, and cutting amount: 0.080mm per rotation were employed; and in the finish machining of the $\phi$18 reamer opening, rotational frequency of the spindle: 2000 rpm, feeding amount: 400m/min, and cutting amount: 0.200mm per rotation were employed. Both operations were performed by wet process (non-aqueous cutting oil; Cutting Lubricant X-5 produced by General Sekiyu).

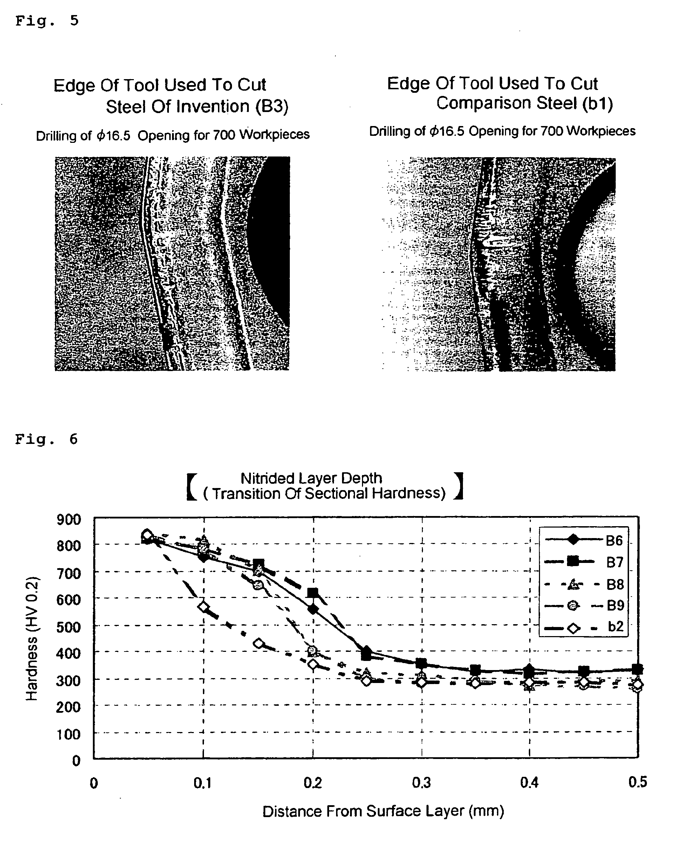

As an example, the graphs shown in Figs. 3 and 4 show the machinability of the steel (B3) of the present invention and the comparison steel (b1) shown in table 5. Fig. 3 shows the transition of the cutting resistance and the cutting torque in relation to the number of processes when the an opening was formed with the $\phi$16.5 drill. Fig. 4 shows the transition of the cutting resistance and the cutting torque in relation to the number of processes when the finish machining of an opening was performed with the $\phi$18 reamer. Photographs, shown in Fig. 5, taken with a stereoscopic microscope show the worn state of the cutting face of the tool when the $\phi$16.5 drill was used to process 700 workpieces.

## Material Components Of Steel Of Invention And Comparison Steel, And Evaluation Of Machinability

Table 5

| Classifi-cation | No. | Chemical Component (wt %) | | | | | | | | | | | | | | $\phi$16.5 Drilling | | Finish Machining Of $\phi$18 Opening | | Machin-ability |
|---|---|---|---|---|---|---|---|---|---|---|---|---|---|---|---|---|---|---|---|---|
| | | C | Si | Mn | P | S | Cr | V | Al | Ca | Mo | Cu | Ni | O | Pb | Cutting Resistance (N) | Cutting Torque (N·m) | Cutting Resistance (N) | Cutting Torque (N·m) | |
| Steel of Invention | B1 | 0.34 | 0.28 | 0.74 | 0.013 | 0.068 | 1.98 | 0.16 | 0.010 | 0.0021 | 0.03 | 0.15 | 0.08 | 0.0045 | — | 865 | 4.8 | 70 | 0.7 | Preferable |
| Steel of Invention | B2 | 0.33 | 0.26 | 0.74 | 0.015 | 0.12 | 1.98 | 0.16 | 0.009 | 0.0019 | 0.03 | 0.15 | 0.08 | 0.0050 | — | 877 | 5.1 | 83 | 1.1 | Equivalent |
| Steel of Invention | B3 | 0.33 | 0.27 | 1.04 | 0.011 | 0.11 | 2.00 | 0.18 | 0.008 | 0.0031 | 0.01 | 0.14 | 0.1 | 0.0050 | — | 873 | 5.0 | 77 | 0.7 | Preferable |
| Steel of Invention | B4 | 0.32 | 0.32 | 1.08 | 0.012 | 0.11 | 1.96 | 0.15 | 0.010 | 0.0014 | 0.02 | 0.02 | 0.03 | 0.0045 | — | 873 | 5.0 | 76 | 1.0 | Equivalent |
| Steel of Invention | B5 | 0.33 | 0.31 | 1.05 | 0.010 | 0.760 | 1.96 | 0.15 | 0.010 | 0.0026 | 0.02 | 0.02 | 0.03 | 0.0050 | — | 810 | 5.0 | 70 | 1.0 | Equivalent |
| Comparison Steel | b1 | 0.33 | 0.27 | 0.75 | 0.016 | 0.010 | 1.06 | — | 0.032 | — | — | 0.13 | 0.07 | — | 0.2 | 871 | 5.1 | 80 | 0.8 | — |

Table 5 and Figs. 3 through 5 indicate that the steel of the present invention has equivalent or higher machinability than the known Pb free-machining steel. That is, the steel of the present invention has favorable machinability.

Next, to evaluate the nitriding property of the steel of the present invention, under a gas nitrocarburizing condition (for example, $580°C \times 3hr[RX:NH_3=200:700(CFH)]$), comparison was made between the above-described SAC430AL steel which is the conventional nitrided steel and the steel of the present invention on the transition of the nitrided layer depth to determine the nitriding property, based on the sectional hardness and the nitrided layer depth in the neighborhood of the surface of each steel. When the sectional hardness in the neighborhood of the surface of the steel of the present invention was equivalent of or harder than that of the surface of the SAC430AL steel and also the nitrided layer depth of the former was equivalent of or larger than that of the latter in the same nitriding condition, it was determined that the former had favorable nitriding property. The synthetic evaluation of the nitriding property of the steel of the present invention shown in table 6 was made based on the above-described determination method.

A graph of Fig. 6 shows the nitrided layer depth (transition of sectional hardness) after nitriding treatment of the steels of the present invention (B6 to B9) and the comparison steel (b2) shown in table 6 was made in the above-described gas nitrocarburizing condition.

Table 6

| Material Component Of Steel Of Invention And Comparison Steel, And Evaluation Of Nitriding Property | | | | | | | | | | | | | | | | |
|---|---|---|---|---|---|---|---|---|---|---|---|---|---|---|---|---|
| Classification | No. | Chemical Component (wt%) | | | | | | | | | | | | | | Nitriding Property |
| | | C | Si | Mn | P | S | Cr | V | Al | Ca | Mo | Cu | Ni | O | Pb | |
| Steel of Invention | B6 | 0.21 | 0.24 | 0.67 | 0.130 | 0.013 | 2.00 | 0.19 | 0.011 | 0.0019 | 0.02 | 0.08 | 0.06 | 0.0045 | - | Preferable |
| Steel of Invention | B7 | 0.22 | 024 | 0.88 | 0.140 | 0.111 1 | 1.82 | 020 | 0.010 | 0.0015 | 0.02 | 0.08 | 0.06 | 0.0050 | - | Preferable |
| Steel of Invention | B8 | 0.17 | 0.26 | 0.67 | 0.170 | 0.104 | 1.99 | 020 | 0.012 | 0.0024 | 0.02 | 0.08 | 0.06 | 0.0050 | - | Preferable |
| Steel of Invention | B9 | 0.17 | 0.25 | 0.67 | 0.150 | 0.097 | 1.99 | 0.15 | 0.011 | 0.0024 | 0.02 | 0.08 | 0.06 | 0.0045 | - | Preferable |
| Comparison Steel | b2 | 0.33 | 0.25 | 1.0 | $\leqq$0.030 | 0.020 | 1.00 | - | 1.1 | - | - | $\leqq$0.30 | $\leqq$0.25 | - | 0.2 | - |

As apparent from table 6 and Fig. 6, the steel of the present invention is almost equal to the comparison steel concerning the sectional hardness in the neighborhood of the surface thereof. Further the nitrided layer depth of the former is larger than that of the latter in every case, and the decrease of the sectional hardness is suppressed inward in the steel of the present invention, meaning that the softening-resistant property is secured. Therefore the steel of the present invention has a favorable nitriding property.

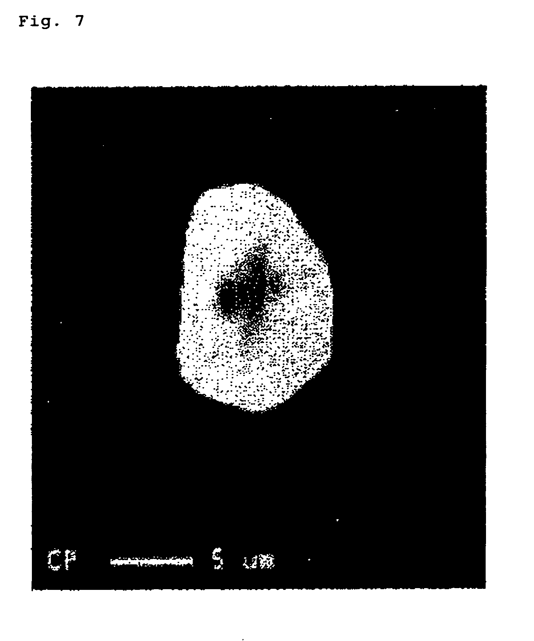

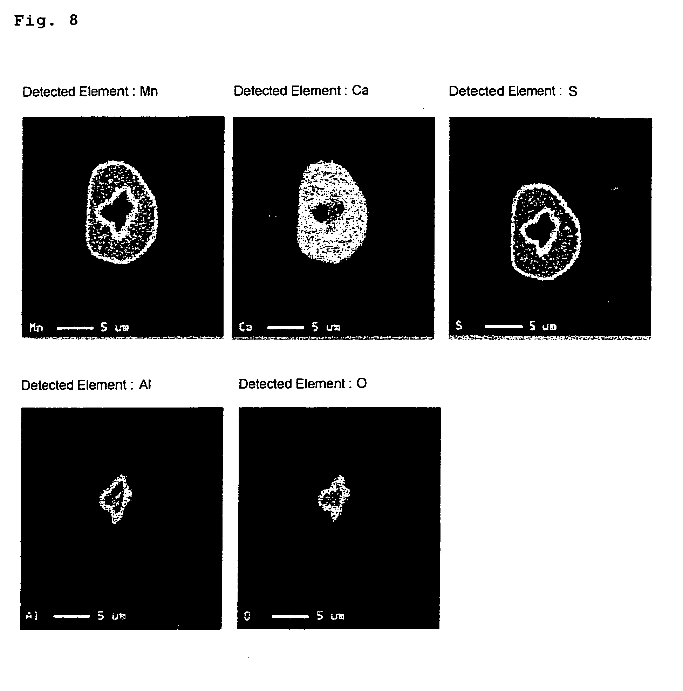

Fig. 7 shows the form of the free-machining component of sulfide form control type contained in the steel of the present invention. Fig. 8 shows the result of componential analysis and examination of the free-machining component shown in Fig. 7. The photograph of Fig. 7 shows the result of observation made by an electron microscope EPMA (JXA8800 manufactured by Nippon Denshi Kabushiki Kaisha). The photograph of Fig. 8 shows the result of a face analysis (mapping) made by the EPMA.

The results of the observation and analysis made by the EPMA reveal that the form of said free-machining component of sulfide form control type is controlled in a spherical shape as shown in an SEM photograph of Fig. 7 obtained by the electron microscope. This indicates that the steel of the present invention is reduced in its anisotropy and excellent in its strength property. As shown in Fig. 8, as a result of the face analysis/examination of the free-machining component of sulfide form control type, it has been found that the said free-machining component of sulfide form control type is in contact with the sulfide having MnS and CaS on the surface of the hard oxide containing $Al_2O_3$ and CaO. Accordingly, in the free-machining component of the present invention, the generation of the hard oxide which improves the grindability of the matrix itself and the generation of the sulfide which forms a tool protection coating of the sulfide on the surface of the tool and thereby improves the life of the tool are controlled to have the spherical shape. Further the free-machining component of sulfide form control type is dispersed uniformly in the matrix. Accordingly, the steel of the present invention can have superior machinability.

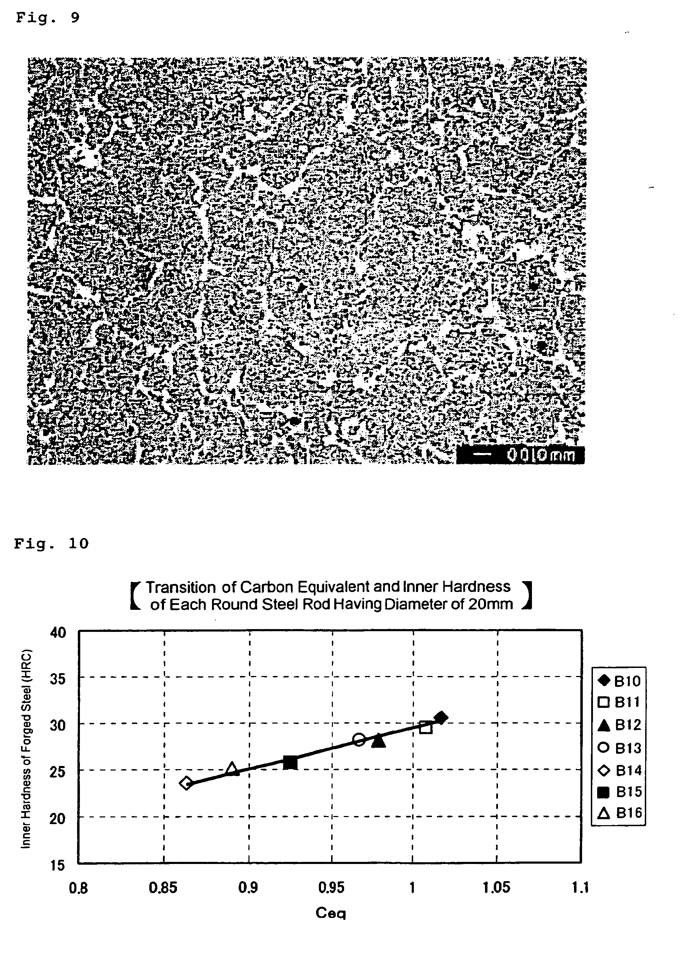

Fig. 9 shows the structure of the untempered steel of the present invention allowed to cool after it is hot-forged at 1200˚C.

As shown by the photograph of structure obtained by using a metal microscope shown in Fig. 9, even though the steel of the present invention is in the said untempered condition, the structure of ferrite + bainite is formed in the steel. Therefore the untempered steel of the present invention can be manufactured with high productivity and can have strength equivalent to that of the tempered steel.

Steels each having the chemical composition shown in table 7 were melted in a 5-ton arc furnace or a 150kg high-frequency vacuum induction furnace, and each steel ingot obtained was hot-forged at 1200˚C to a round rod having a diameter of 20mm, and thereafter allowed to cool. The hardness of the inside of the round rod having a diameter of 20mm was examined, and the results shown in table 7 and Fig. 10 were obtained. The content of C, Mn, S, Cr, and V were determined in such a way that the carbon equivalent Ceq indicated by ($[C]+0.27\times([Mn]-55\times[S]/32)+0.31\times[Cr]+0.3\times[V]$) was set in the range of 0.8 to 1.1 wt%.

| Material Components Of Steel Of Invention, And Measurement Of Inner Hardness After Forging | | | | | | | | | | | | |
|---|---|---|---|---|---|---|---|---|---|---|---|---|
| Classification | No. | Chemical Component (wt %) | | | | | | | | | | | Inner Hardness After Forging (HRC) |
| | | C | Si | Mn | P | S | Cr | V | Al | Ca | O | Ceq | |
| Steel of Invention | B10 | 0.20 | 0.25 | 0.67 | 0.01 | 0.102 | 2.01 | 0.20 | 0.012 | 0.0015 | 0.0045 | 1.017 | 30.6 |
| | B11 | 0.20 | 0.26 | 0.87 | 0.01 | 0.111 | 1.82 | 0.20 | 0.010 | 0.0019 | 0.0050 | 1.008 | 29.5 |
| | B12 | 0.17 | 0.25 | 0.67 | 0.01 | 0.104 | 1.99 | 020 | 0.011 | 0.0015 | 0.0050 | 0.980 | 28.1 |
| | B13 | 0.17 | 0.25 | 0.67 | 0.01 | 0.098 | 1.99 | 0.15 | 0.011 | 0.0024 | 0.0050 | 0.967 | 28.1 |
| | B14 | 0.15 | 0.25 | 0.56 | 0.01 | 0.094 | 1.81 | 0.15 | 0.012 | 0.0024 | 0.0045 | 0.864 | 23.6 |
| | B15 | 0.15 | 0.26 | 0.56 | 0.01 | 0.095 | 2.01 | 0.15 | 0.011 | 0.0025 | 0.0050 | 0.925 | 25.7 |
| | B16 | 0.15 | 025 | 0.60 | 0.01 | 0.113 | 1.86 | 0.18 | 0.011 | 0.0013 | 0.0050 | 0.890 | 25.2 |

HRC.

As described above, since the softening-resistant property after nitriding treatment is secured in the steel of the present invention, it is possible to restrain nitriding-caused reduction of the internal hardness and impart good fatigue strength to the steel after nitriding treatment is performed. Thereby it is possible to produce rocker arm products superior in the strength property.

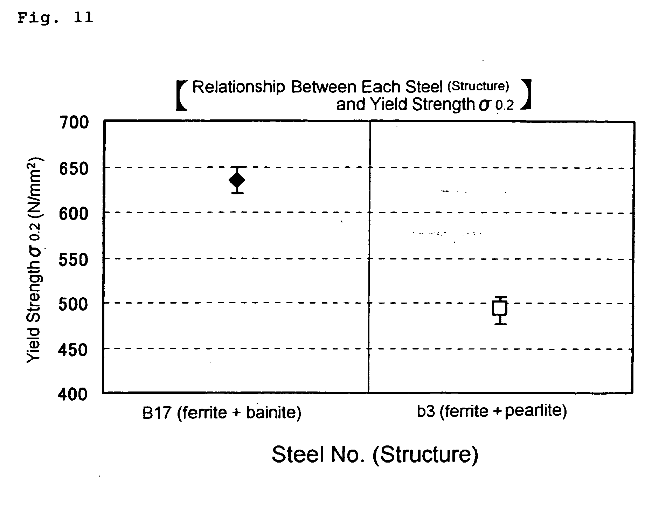

Steels each having the chemical composition shown in table 8 were melted in the 5-ton arc furnace or the 150kg high-frequency vacuum induction furnace, and each steel ingot obtained was hot-forged at 1200°C into a desired configuration, and thereafter allowed to cool. Then the steel ingots formed into a desired configuration were processed into the configuration of a JIS-14A specimen, and after that, gas nitrocarburizing treatment (580°C $\times$ 1.5hr[RX:NH$_3$=200: 450(CFH)]) was carried out to examine the tensile strength. Table 8 and Fig. 11 show the result of the above examination. The carbon equivalent Ceq was computed from the formula ([C]+0.27$\times$([Mn]-55$\times$[S]/32)+0.31$\times$[Cr]+0.3$\times$[V]).

| Material Components Of Steel Of Invention And Comparison Steel, Structure After Forging, Result Of Tensile Test (Yield Strength $\sigma_{0.2}$ at Permanent Elongation $\varepsilon = 0.2\%$) | | | | | | | | | | | | | | |
|---|---|---|---|---|---|---|---|---|---|---|---|---|---|---|
| Classification | No. | Chemical Component (wt%) | | | | | | | | | | Ceq | Yield Strength $\sigma_{0.2}$ After Forging (N/mm$^2$) | Structure After Forging |
| | | C | Si | Mn | P | S | Cr | V | Al | Ca | O | | | |
| Steel Of Invention | B17 | 0.15 | 0.25 | 0.60 | 0.015 | 0.110 | 1.90 | 0.18 | 0.011 | 0.0021 | 0.0050 | 0.904 | 620~650 | ferrite + bainite |
| Comparison Steel | b3 | 0.095 | 025 | 0.69 | 0.015 | 0.110 | 1.90 | 0.15 | 0.012 | 0.0023 | 0.0050 | 0.864 | 476~506 | ferrite + pearlite |

invention is allowed to have the structure of the ferrite + bainite in a condition where the steel is hot-forged and cooled. Thus it is possible to improve the tensile strength of the steel, thereby it is possible to manufacture the steel for a rocker arm excellent in the strength property.

Industrial Applicability

The inclusion providing high machinability, specifically the free-machining component of sulfide form control type is present in the most suitable form in the to-be-nitrided bainite-type untempered steel of the present invention. Therefore it becomes possible to realize the superior machinability.

Until now, the form of inclusions imparting preferable machinability to the steel has been investigated to some extent in various free-machining steels. However, there has been no satisfactory means for forming such inclusions providing superior machinability with high reproducibility. The present invention has overcome the problem of the conventional art in this regard, and is capable of manufacturing the bainite-type untempered free-machining steel to-be-nitrided which constantly has excellent machinability by producing in such a way satisfying the above-described operating conditions.

The distinctive advantage of the to-be-nitrided bainite-type untempered steel of the present invention is that, without adding Pb which has been indispensable for improving the machinability of this type of nitrided steel in conventional methods, the steel is provided with machinability equal to or higher than that of the conventional steel containing Pb. It is well known that the use of Pb tend to cause problems in environment where steel is manufactured or processed, and using and discarding of Pb are not preferable, therefore nowadays efforts are made to the utmost to avoid the use of Pb.

The steel for the rocker arm of the present invention has machinability equivalent to that of the known Pb free-machining steel and is superior in nitriding property such as a nitrided layer depth. Further, a strength equivalent to that of the known tempered steel can be obtained even it is not tempered. Therefore it is possible to manufacture rocker arm products from various kinds of steel at a low cost and with high productivity.

**Claims**

1. A bainite-type untempered steel to be nitrided comprising alloy compositions C: 0.05 to 0.8 wt%, Si: 0.01 to 2.5 wt%, Mn: 0.1 to 3.5 wt%, P: 0.001 to 0.2 wt%, S: 0.01 to 0.2 wt%, Cr: 1.0 to 3.5 wt%, V: 0.1 to 0.5 wt%, Al: 0.001 to 0.020 wt%, Ca: 0.0005 to 0.02 wt% and O: 0.0005 to 0.01 wt%, and
further optionally comprising one or more element(s) selected from Mo: 2.0 wt% or less, Cu: 2.0 wt% or less, Ni: 4.0 wt% or less, B: 0.0005 to 0.01 wt%, Nb: 0.2 wt% or less, Ti: 0.2 wt% or less, Ta: 0.5 wt% or less, Zr: 0.5 wt% or less, Mg: 0.02 wt% or less, Pb: 0.4 wt% or less, Bi: 0.4 wt% or less, Se: 0.4 wt% or less and Te: 0.2 wt% or less; and
the residue composed of unavoidable impurities and Fe wherein an occupation area of a sulfide inclusion present in contact with an oxide inclusion containing 8 to 62 wt% of CaO and containing not less than 1.0 wt% of Ca is not less than $2.0 \times 10^{-4}$mm$^2$ per visual field area of 3.5mm$^2$,
provided that
each content of said Mn, said S, and said Cr satisfies the following formula:

$$([Mn]-55\times[S]/32+[Cr]) > 2.0$$

(where [ ] indicates wt% (wt/wt) of each element) when Mo is not comprised; or each content of said Mn, said S, said Cr and said Mo satisfies the following formula:

$$([Mn]-55\times[S]/32+[Cr]+[Mo]) > 2.0$$

(where [ ] indicates wt% (wt/wt) of each element)when Mo is comprised.

2. A bainite-type untempered steel to be nitrided claimed in claim 1, wherein Pb is absent.

3. A nitrided product formed by shaping the bainite-type untempered steel to be nitrided claimed in claim 1 or 2 into a configuration of a mechanical component part, followed by nitriding said shaped bainite-type untempered steel.

4. A bainite-type untempered steel to be nitrided claimed in claim 1, wherein the content of C is 0.1 to 0.5 wt%, and a hard oxide in contact with a sulfide composed of MnS and CaS is dispersed in a matrix; said hard oxide contains $Al_2O_3$ and CaO,
   provided that each content of said Cr and said V satisfies the following formula:

$$[Cr]+1.97\times[V])\geqq 2.15$$

(where [ ] indicates wt% (wt/wt) of each element).

5. A bainite-type untempered steel to be nitrided claimed in claim 4, wherein Pb is absent.

6. A bainite-type untempered steel to be nitrided claimed in any one of claims 4 and 5, having an inner hardness of 20 to 35 HRC and having a structure of ferrite + bainite, wherein carbon equivalent Ceq indicated by ($[C]+0.27\times($ $[Mn]-55\times[S]/32)+0.31\times[Cr]+0.3\times[V]$) (where [ ] indicates wt% (wt/wt) of each element) is set in a range of 0.8 to 1.1 wt%.

7. A rocker arm manufactured from the bainite-type untempered steel to be nitrided claimed in any one of claims 4 through 6.

8. Use of a bainite-type untempered steel to be nitrided for manufacture of a rocker arm, wherein the bainite-type untempered steel to be nitrided is as defined in claim 1, provided that C is 0.1 to 0.5 wt%.

**Patentansprüche**

1. Ungetemperter zu nitrierender Bainit-Stahl, umfassend die Legierungszusammensetzungen C: 0,05 bis 0,8 Gew.-%, Si: 0,01 bis 2,5 Gew.-%, Mn: 0,1 bis 3,5 Gew.-%, P: 0,001 bis 0,2 Gew.-%, S: 0,01 bis 0,2 Gew.-%, Cr: 1,0 bis 3,5 Gew.-%, V: 0,1 bis 0,5 Gew.-%, Al: 0,001 bis 0,020 Gew.-%, Ca: 0,0005 bis 0,02 Gew.-% und O: 0,0005 bis 0,01 Gew.-%, und
   weiterhin umfassend gegebenenfalls ein oder mehrere Elemente, die ausgewählt sind aus Mo: 2,0 Gew.-% oder weniger, Cu: 2,0 Gew.-% oder weniger, Ni: 4,0 Gew.-% oder weniger, B: 0,0005 bis 0,01 Gew.-%, Nb: 0,2 Gew.-% oder weniger, Ti: 0,2 Gew.-% oder weniger, Ta: 0,5 Gew.% oder weniger, Zr: 0,5 Gew.-% oder weniger, Mg: 0,02 Gew.-% oder weniger, Pb: 0,4 Gew.-% oder weniger, Bi: 0,4 Gew.-% oder weniger, Se: 0,4 Gew.-% oder weniger und Te: 0,2 Gew.-% oder weniger; und
   wobei der Rest aus unvermeidbaren Verunreinigungen und Fe zusammengesetzt ist, wobei eine eingenommene Fläche eines vorhandenen Sulfideinschlusses, in Kontakt mit einem Oxideinschluss, der 8 bis 62 Gew.-% CaO und nicht weniger als 1,0 Gew.-% Ca enthält, nicht weniger als $2,0 \times 10^{-4}$ mm$^2$ pro Sichtfläche von 3,5 mm$^2$ ausmacht, unter der Maßgabe, dass
   der jeweilige Gehalt an Mn, S und Cr der folgenden Formel entspricht:

$$([Mn] - 55 \times [S]/32 + [Cr]) > 2,0$$

(wobei [ ] Gew.-% (wt/wt) des jeweiligen Elements bedeutet), wenn Mo nicht enthalten ist; oder
der jeweilige Gehalt an Mn, S, Cr und Mo der folgenden Formel entspricht:

$$([Mn] + 55 \times [S]/32 + [Cr] + [Mo]) > 2,0$$

(wobei [ ] Gew.-% (wt/wt) des jeweiligen Elements bedeutet), wenn Mo enthalten ist.

2. Ungetemperter zu nitrierender Bainit-Stahl nach Anspruch 1, wobei kein Pb enthalten ist.

3. Nitrierungsprodukt, gebildet durch Formen des ungetemperten zu nitrierenden Bainit-Stahls nach Anspruch 1 oder 2 zu einer Konfiguration eines mechanischen Bauteils und anschließendes Nitrieren des geformten ungetemperten Bainit-Stahls.

4. Ungetemperter zu nitrierender Bainit-Stahl nach Anspruch 1, wobei der Gehalt an C 0,1 bis 0,5 Gew.-% beträgt, und wobei ein hartes Oxid in Kontakt mit einem Sulfid, das aus MnS und CaS zusammengesetzt ist, in einer Matrix dispergiert ist; wobei das harte Oxid $Al_2O_3$ und CaO enthält,
unter der Maßgabe, dass der jeweilige Gehalt an Cr und V der folgenden Formel entspricht:

$$[Cr] + 1,97 \times [V] \geq 2,15$$

(wobei [ ] Gew.-% (wt/wt) des jeweiligen Elements bedeutet).

5. Ungetemperter zu nitrierender Bainit-Stahl nach Anspruch 4, wobei kein Pb enthalten ist.

6. Ungetemperter zu nitrierender Bainit-Stahl nach einem der Ansprüche 4 und 5, mit einer inneren Härte von 20 bis 35 HRC und mit einer Struktur von Ferrit + Bainit, wobei das Kohlenstoffäquivalent Ceq, angegeben durch ([C] + 0,27 x ([Mn] - 55 x [S]/32) + 0,31 x [Cr] + 0,3 x [V]) (wobei [ ] Gew.-% (wt/wt) des jeweiligen Elements bedeutet) in einem Bereich von 0,8 bis 1,1 Gew.-% eingestellt ist.

7. Kipphebel, hergestellt aus dem ungetemperten zu nitrierenden Bainit-Stahl nach einem der Ansprüche 4 bis 6.

8. Verwendung eines ungetemperten zu nitrierenden Bainit-Stahls zur Herstellung eines Kipphebels, wobei der ungetemperte zu nitrierende Bainit-Stahl wie in Anspruch 1 definiert ist, unter der Maßgabe, dass C 0,1 bis 0,5 Gew.-% beträgt.


**Revendications**

1. Acier non durci de type bainite à nitrurer comprenant les compositions d'alliage C : 0,05 à 0,8 % en poids, Si : 0,01 à 2,5 % en poids, Mn : 0,1 à 3,5 % en poids, P : 0,001 à 0,2 % en poids, S : 0,01 à 0,2 % en poids, Cr : 1,0 à 3,5 % en poids, V : 0,1 à 0,5 % en poids, Al : 0,001 à 0,020 % en poids, Ca : 0,0005 à 0,02 % en poids et 0 : 0,0005 à 0,01 % en poids et comprenant en outre facultativement un ou plusieurs élément(s) choisis parmi Mo : 2,0 % en poids ou moins, Cu : 2,0 % en poids ou moins, Ni : 4,0 % en poids ou moins, B : 0,0005 à 0,01 % en poids, Nb : 0,2 % en poids ou moins, Ti : 0,2 % en poids ou moins, Ta : 0,5 % en poids ou moins, Zr : 0,5 % en poids ou moins, Mg : 0,02 % en poids ou moins, Pb : 0,4 % en poids ou moins, Bi : 0,4 % en poids ou moins, Se : 0,4 % en poids ou moins et Te : 0,2 % en poids ou moins ; et le reste composé d'impuretés inévitables et de Fe, dans lequel une surface d'occupation d'une inclusion de sulfure présente en contact avec une inclusion d'oxyde contenant 8 à 62 % en poids de CaO et contenant pas moins de 1,0 % en poids de Ca n'est pas inférieure à $2,0 \times 10^{-4}$ mm$^2$ par zone de champ visuel de 3,5 mm$^2$, à condition
que chaque teneur en ledit Mn, ledit S et ledit Cr satisfasse la formule suivante :

```
([Mn]–55x[S]/32+[Cr])>2,0
```

(où [] indique le % en poids (p/p) de chaque élément) lorsque Mo n'est pas compris ; ou que chaque teneur en ledit Mn, ledit S, ledit Cr et ledit Mo satisfasse la formule suivante :

```
([Mn]–55x[S]/32+[Cr]+[Mo])>2,0
```

(où [] indique le % en poids (p/p) de chaque élément) lorsque Mo est compris.

2. Acier non durci de type bainite à nitrurer selon la revendication 1, dans lequel Pb est absent.

3. Produit nitruré formé en façonnant l'acier non durci de type bainite à nitrurer selon la revendication 1 ou 2 en une configuration d'une pièce de composant mécanique, suivi par la nitruration dudit acier non durci de type bainite façonné.

4. Acier non durci de type bainite à nitrurer selon la revendication 1, dans lequel la teneur en C est de 0,1 à 0,5 % en poids, et
un oxyde dur en contact avec un sulfure composé de MnS et de CaS est dispersé dans une matrice ; ledit oxyde dur contient du $Al_2O_3$ et du CaO,
à condition que chaque teneur en ledit Cr et ledit V satisfasse la formule suivante :

$$[Cr]+1,97x[V] \geq 2,15$$

(où [] indique le % en poids (p/p) de chaque élément).

5. Acier non durci de type bainite à nitrurer selon la revendication 4, dans lequel Pb est absent.

6. Acier non durci de type bainite à nitrurer selon l'une quelconque des revendications 4 et 5, ayant une dureté interne de 20 à 35 HRC et ayant une structure de ferrite + bainite, dans lequel l'équivalent de carbone Ceq indiqué par ([C] +0,27x([Mn]-55x[S]/32)+0,31x[Cr] +0,3x[V]) (où [ ] indique le % en poids (p/p) de chaque élément) est fixé dans une plage de 0,8 à 1,1 % en poids.

7. Culbuteur fabriqué à partir de l'acier non durci de type bainite à nitrurer selon l'une quelconque des revendications 4 à 6.

8. Utilisation d'un acier non durci de type bainite à nitrurer pour la fabrication d'un culbuteur, dans laquelle l'acier non durci de type bainite à nitrurer est tel que défini dans la revendication 1, à condition que C soit 0,1 à 0,5 % en poids.

Fig. 1

Fig. 2

Fig. 3

【Drilling of $\phi$16.5 Opening】

Fig. 4

【Finish Machining of $\phi$18 Opening by Reamer】

Fig. 5

Edge Of Tool Used To Cut
Steel Of Invention (B3)

Drilling of φ16.5 Opening for 700 Workpieces

Edge Of Tool Used To Cut
Comparison Steel (b1)

Drilling of φ16.5 Opening for 700 Workpieces

Fig. 6

【 Nitrided Layer Depth
( Transition Of Sectional Hardness) 】

Fig. 7

Fig. 8

Detected Element : Mn

Detected Element : Ca

Detected Element : S

Detected Element : Al

Detected Element : O

Fig. 9

Fig. 10

【 Transition of Carbon Equivalent and Inner Hardness of Each Round Steel Rod Having Diameter of 20mm 】

Inner Hardness of Forged Steel (HRC)

◆ B10
□ B11
▲ B12
○ B13
◇ B14
■ B15
△ B16

Ceq

Fig. 11

[ Relationship Between Each Steel (Structure)
and Yield Strength $\sigma$ 0.2 ]

B17 (ferrite + bainite)          b3 (ferrite + pearlite)

Steel No. (Structure)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49005815 A
- JP 10287953 A
- JP 2000034538 A
- JP 2000219936 A
- JP 2001174606 A